# EUROPÄISCHE PATENTSCHRIFT

(11) **EP 1 977 981 B1**
(45) Veröffentlichungstag und Bekanntmachung des Hinweises auf die Patenterteilung: **23.12.2009**
(21) Anmeldenummer: 07105600.6
(22) Anmeldetag: 04.04.2007
(51) Int. Cl.: B65G 1/08, G07F 11/32

(54) **Automatisiertes Stückgutlager mit geneigten Lagerschächten, die an ihrem unteren Ende eine von einem Bediengerät betätigbare Sperrvorrichtung aufweisen**
Automated piece goods warehousing with inclined storage trays and a locking device at the lower end operated by an actuating device
Entrepôt automatisé doté de puits de stockage inclinés comportant un dispositif de verrouillage actionnable par un appareil de commande sur son extrémité inférieure

(43) Veröffentlichungstag der Anmeldung: 08.10.2008
(73) Patentinhaber: Rowa Automatisierungssysteme GmbH, 53539 Kelberg (DE)
(72) Erfinder: Gross, Dietmar, 53539 Kelberg (DE)
(74) Vertreter: Schmidt, Frank-Michael

(56) Entgegenhaltungen:
- EP-A- 1 321 384
- EP-A- 1 439 502
- EP-A- 1 684 244
- JP-A- 11 086 120
- US-A- 3 991 907

## Beschreibung

Die Erfindung betrifft automatisierte Stückgutlager nach dem Oberbegriff des Anspruchs 1.

Im Stand der Technik sind eine Reihe von automatisierten Stückgutlagern für eine Vielzahl von Stückgütern unterschiedlicher Art und Abmessungen, beispielsweise für Arzneimittelpackungen, bekannt. Üblicherweise liegen bei den bekannten Stückgutlagern in jedem der Lagerschächte Stückgüter gleicher Art und Abmessung. Aus der am 14. März 2007 veröffentlichten Patentanmeldung EP 1 762 511 A1 ist es darüber hinaus bekannt, auch Stückgüter unterschiedlicher Art innerhalb eines Lagerschachts zu lagern.

An den jeweiligen unteren Enden der geneigten Lagerschächte sind üblicherweise Sperrvorrichtungen (auch als Auslösevorrichtungen bezeichnet) angeordnet, die ein Herausrutschen der einliegenden Stückgüter verhindern. Im einfachsten Fall bestehen derartige Sperrvorrichtungen aus Anschlägen, die aus dem Boden des Lagerschachts nach oben abgewinkelt sind. Derartige Anschläge sind beispielsweise aus der Offenlegungsschrift DE 43 36 885 A1, dem Gebrauchsmuster DE 298 17 529 U1 oder dem Gebrauchsmuster DE 202 14 241 U1 bekannt. Bei einer aus der Patentschrift DE 197 24 377 C2 bekannten Lageranordnung werden die Anschläge von Schraubenköpfen von Befestigungsschrauben gebildet. Bei den genannten Anordnungen wird ein Stückgut von einem Bediengerät aus dem Lagerschacht entnommen, indem es von einem Greiffinger des Bediengeräts über den Anschlag gehoben wird, so daß es aus dem Lagerschacht herausrutscht, wobei dahinter einliegende Stückgüter gegen den Anschlag nachrutschen. Um ein Anheben der Stückgüter durch einen Greiffinger des Bediengeräts zu ermöglichen, weist der Lagerschacht herkömmlicherweise einen nach vorn offenen Schlitz im Boden auf, durch den der Greiffinger des Bediengeräts von unten nach oben geführt werden kann, um das darüberliegende Stückgut anzuheben.

Um die Stückgüter in den Lagerschacht einzulagern, werden üblicherweise einzelne Stückgüter manuell oder von einer Greifvorrichtung am oberen Ende des Lagerschachts eingeschoben und rutschen dann nach unten. Es ist darüber hinaus auch bekannt, ein Bediengerät mit einem Pufferschacht auszustatten, in dem hintereinander mehrere einzulagernde Stückgüter einliegen, die dann einzeln von unten nach oben in einen mit gleichartigen Stückgütern gefüllten Lagerschacht eingeschoben werden, wobei das Bediengerät mit seinem Pufferschacht so positioniert wird, daß die einzuschiebenden Stückgüter über eine Sperre (einen Anschlag) hinweg geschoben werden. Ein solches automatisiertes Stückgutlager, welches von der eingangs genannten Art ist, ist beispielsweise aus der Patentschrift DE 196 35 396 C2 bekannt. Bei dieser bekannten Lageranordnung weist das Bediengerät eine Einlagerungsvorrichtung auf. Die Einlagerungsvorrichtung umfaßt einen als Rutsche bezeichneten Boden eines Einlagerungspuffers, der an seinem unteren Ende einen Schieber zum Hinaufschieben von Stückgütern aufweist. Zum Einlagern von Stückgütern wird die Rutsche des Bediengeräts so positioniert, daß das obere Ende oberhalb des am unteren Ende eines Lagerschachts angeordneten Anschlags angeordnet ist. Der Schieber wird betätigt und schiebt ein oder mehrere Stückgüter über den Anschlag hinweg in den Lagerschacht.

Aus der zuletzt genannten Druckschrift sind außerdem als Einlagerungspuffer dienende Lagerschächte bekannt, in denen auch unterschiedliche Stückgüter gelagert sein können und die an ihrem unteren Ende neben einem Anschlag einen aus dem Boden des Lagerschachts nach oben herausfahrbaren Stößel aufweisen. Wenn der Stößel betätigt wird, so stößt dieser ein am Anschlag anliegendes Stückgut über den Anschlag hinweg, so daß das Stückgut herausrutschen und in den Pufferschacht des Bediengeräts hineinrutschen kann. Die den Stößel betätigende Auslösevorrichtung ist aktiv, d.h. jedem Lagerschacht ist ein eigener Betätigungsantrieb zugeordnet:
Aktive Sperrvorrichtungen, die am unteren Ende eines geneigten Lagerschachts angeordnet sind und jeweils eine eigene elektromechanische Ansteuervorrichtung aufweisen, sind beispielsweise auch aus den Druckschriften WO 00/58189 und WO 02/063579 A1 bekannt. Mit derartigen Sperr- oder Auslösevorrichtungen ausgestatteten Stückgutlager haben jedoch den Nachteil, daß sie relativ aufwendig und teuer sind. Sie werden deshalb grundsätzlich nur dort eingesetzt, wo wenige Lagerschächte verwendet werden oder dort, wo kein Bediengerät vorgesehen ist und die austretenden Stückgüter beispielsweise auf ein Förderband fallen.
Aus dem Gebrauchsmuster DE 20 2004 020 325 U1 ist ebenfalls ein geneigter Lagerschacht zur Aufnahme mehrerer Stückgüter bekannt, an dessen unteres Ende ein Bediengerät mit einem Pufferschacht herangefahren werden kann. Auch hier weist der Lagerschacht an seinem unteren Ende einen Anschlag als Sperre auf. Bei der dort beschriebenen Anordnung wird nicht das einzelne Stückgut von dem Bediengerät über den Anschlag gehoben, sondern vielmehr wird der gesamte Lagerschacht angehoben, während der als Sperre wirkende Anschlag, der an einer Auflage des Lagerschachts befestigt ist, ortsfest bleibt. Beim Anheben des Lagerschachts durch das Bediengerät fährt der Anschlag unter den Boden des Lagerschachts und gibt somit die Stückgüter frei, die dann in den Pufferschacht des Bediengeräts rutschen können. Diese bekannte Anordnung stellt eine passive Sperrvorrichtung dar, da sie von dem Bediengerät betätigt wird und keinen eigenen Antrieb aufweist. Nachteilig bei der bekannten Anordnung ist es, daß das von dem Bediengerät anzuhebende Gewicht (Lagerschacht mit ggf. mehreren einliegenden, unterschiedlich schweren und großen Stückgütern) stark variiert und relativ groß sein kann, so daß das Bediengerät zum Anheben des Lagerschachts einen relativ stabilen und großen Betätigungsantrieb aufweisen muß.
Ein Stückgutlager mit den Merkmalen des Oberbegriffs des Anspruchs 1 ist aus der JP 11086120 A bekannt.
Aufgabe der Erfindung ist es, ein automatisiertes Stückgutlager mit geneigten Lagerschächten zu schaffen, das für eine einfache und sichere Einlagerung und Auslagerung von Stückgütern am unteren Ende jedes Lagerschachts eine einfache Sperrvorrichtung zur Verfügung stellt.
Diese Aufgabe wird erfindungsgemäß durch ein automatisiertes Stückgutlager mit den Merkmalen des Anspruchs 1 gelöst. Ein Grundgedanke besteht darin, die Betätigung eines in den Lagerschacht hineinbewegbaren Sperrbauteils von dem Bediengerät vornehmen zu lassen, so daß einerseits die Kosten einer separaten elektromechanischen Betätigungsvorrichtung an jedem Lagerschacht eingespart werden können und andererseits weder ein Anheben der (unterschiedlich schweren) Stückgüter noch des gesamten Lagerschachts erforderlich ist. Erfindungsgemäß weist die unter dem Lagerschacht angeordnete passive Sperrvorrichtung ein von unten in den Lagerschacht hineinbewegbares Sperrbauteil, wenigstens ein das Sperrbauteil in den Lagerschacht hineindrückendes Vorspannelement und ein an einem Ansatz des Sperrbauteils angreifendes Betätigungselement auf, wobei das Betätigungselement so ausgebildet ist, daß es von einem an das untere Ende des Lagerschachts heranfahrenden Bediengerät derart betätigt werden kann, daß das Sperrbauteil aus dem Lagerschacht herausbewegt wird, so daß Stückgüter aus dem Lagerschacht in eine Aufnahme des Bediengeräts (beispielsweise in einen Pufferschacht oder auf ein Förderband) hinabrutschen können. Die Stückgüter können hinabrutschten oder - bei Vorhandensein eines Bediengeräts mit einem Pufferschacht und einer Schiebevorrichtung zum Hinaufschieben von Stückgütern - hinaufgeschoben werden, ohne daß dabei irgendeine Barriere zu überwinden ist. Damit werden die bei dem bekannten Prinzip des Anhebens des Stückguts über eine Sperre bekannten Gewichtsverteilungsprobleme vermieden. Das Betätigungselement weist einen zweiseitigen Hebel auf, dessen eines Ende an dem Ansatz des Sperrbauteils angreift und an dessen anderem Ende das Bediengerät angreift. Der zweiseitige Hebel ist nicht nur relativ einfach herstellbar; er hat zudem den Vorteil, daß eine Aufwärtsbewegung eines an dem Hebel angreifenden Bauteils des Bediengeräts zu einer Abwärtsbewegung des an dem Ansatz des Sperrbauteils angreifenden anderen Hebelendes führt. Das Sperrbauteil wird aus dem Lagerschacht bewegt, wenn das Bediengerät das ihm zugewandte Ende des Hebels nach oben bewegt. Dies gestattet ein unmittelbar benachbartes Anordnen mehrerer Lagerschächte.

Bei einer Ausführungsform ist das Sperrbauteil über wenigstens ein Vorspannelement an dem Boden des Lagerschachts befestigt. Bei dem Vorspannelement handelt es sich beispielsweise um einen elastischen Federarm. Bei dieser Ausführungsform stützt sich der Schwenkpunkt des Hebels an der Bodenunterseite des Lagerschachts ab.

Bei einer anderen Ausführungsform weist die Sperrvorrichtung einen (z. B. an dem Lagerschacht befestigten) Stützrahmen auf. Das Sperrbauteil ist über das Vorspannelement (beispielsweise zwei elastische Federarme) an dem Stützrahmen befestigt. Der Schwenkpunkt des Hebels stützt sich auf dem Stützrahmen ab. Dabei kann der Schwenkpunkt des Hebels beispielsweise gegen einen Abschnitt des Stützrahmens drücken, der unmittelbar an der Bodenunterseite des Lagerschachts anliegt. Alternativ kann der Schwenkpunkt des Hebels auch an einem Bauteil ziehen, das einen an der Unterseite der Sperrvorrichtung angeordneten Stützrahmen befestigt ist.

Bei einer vorteilhaften Weiterbildung der Erfindung sind das Sperrbauteil, das wenigstens eine Vorspannelement und das Betätigungselement der Sperrvorrichtung einstückig ausgebildet. Beispielsweise sind diese Bauteile einstückig als ein Kunststoff-Spritzgußbauteil ausgebildet. Dies gestattet eine einfache und kostengünstige Herstellung. Das Spritzgußbauteil weist vorzugsweise Ansätze auf, mit deren Hilfe es in an dem Lagerschacht angeformten Halterungen formschlüssig gehalten wird. Beispielsweise kann das Spritzgußbauteil mit Hilfe der Ansätze in Ausnehmungen am Boden des Lagerschachts eingeklemmt sein.

Bei einer bevorzugten Ausführungsform des Stückgutlagers weist das Bediengerät einen Pufferschacht zur Aufnahme mehrerer zu transportierender Stückgüter auf, wobei ein Ende des Pufferschachts jeweils an ein unteres Endes eines Lagerschachts heranfahrbar ist, wobei das Bediengerät eine Schiebevorrichtung zum Halten und Verschieben der im Pufferschacht einliegenden Stückgüter aufweist. Das Sperrbauteil wird bei Betätigung des Betätigungselements derart aus dem Lagerschacht herausbewegt, daß Stückgüter mit Hilfe der Schiebevorrichtung aus dem Pufferschacht in den Lagerschacht hinaufgeschoben werden können. Aufgrund der fehlenden Barriere ist ein Hochschieben mehrerer hintereinander liegender Packungen aus dem Pufferschacht des Bediengeräts in den Lagerschacht auch bei gleichzeitigem Hochschieben mehrerer bereits in dem Lagerschacht einliegender Packungen problemlos möglich. Bei den aus dem Stand der Technik bekannten Lagerschächten, die an ihrem unteren Ende eine Barriere aufweisen (z. B. DE 196 35 396 C2), war es beim hochschieben mehrerer (insbesondere schwerer) Stückgüter erforderlich, den von der Schiebevorrichtung aufgestauten Stapel auf den Schachtboden abzusenken, sobald das vordere (untere) Ende des einzulagernden Stückguts hinter die Barriere hochgeschoben war. Der Schieber mußte zusätzlich nach unten (zum Schachtboden hin) bewegt werden, was die Handhabungszeit verlängerte. Dieser Nachteil wird durch die Erfindung vermieden.

Vorteilhafte und/oder bevorzugte Weiterbildungen der Erfindung sind in den Unteransprüchen gekennzeichnet.

Im folgenden wird die Erfindung anhand von in den Zeichnungen dargestellten bevorzugten Ausführungsformen näher erläutert. In den Zeichnungen zeigen:
Figuren 1A-1C verschiedene Ansichten einer ersten bevorzugten Ausführungsform eines Spritzgußbauteils für eine passive Sperrvorrichtung des erfindungsgemäßen Stückgutlagers;
Figur 2A-2D schematische Seitenansichten eines Lagerschachts mit einer das Spritzgußbauteil gemäß den Figuren 1A-1C aufweisenden Sperrvorrichtung, wobei verschiedene Phasen eines Bewegungsablaufs des Hinabrutschens und Wieder-Hinaufschiebens der Stückgüter aus bzw. in den Lagerschacht dargestellt sind;
Figuren 3A-3C verschiedene Ansichten einer zweiten bevorzugten Ausführungsform eines Spritzgußbauteils für eine passive Sperrvorrichtung des erfindungsgemäßen Stückgutlagers; und
Figuren 4A-4D schematische Seitenansichten eines Lagerschachts mit einer das Spritzgußbauteil gemäß den Figuren 3A-3C aufweisenden Sperrvorrichtung, wobei verschiedene Phasen des Hinabrutschens von Stückgütern aus dem Lagerschacht und des Wieder-Hinaufschiebens in den Lagerschacht dargestellt sind.

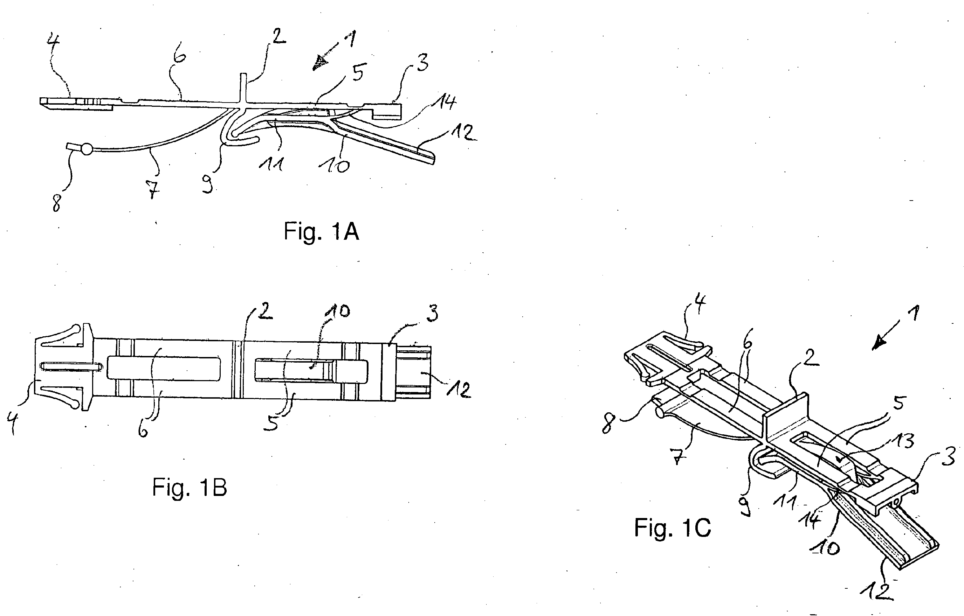

Figur 1A zeigt eine Seitenansicht einer ersten bevorzugten Ausführungsform eines Spritzgußbauteils für eine passive Sperrvorrichtung des erfindungsgemäßen Stückgutlagers. Figur 1B zeigt eine Draufsicht und Figur 1C eine Perspektivansicht von oben, vorn.

Das in den Figuren 1A bis 1C gezeigte Spritzgußbauteil 1 ist einstückig aus Kunststoff durch Spritzguß hergestellt. Das Spritzgußbauteil 1 ist in der in Figur 1A dargestellten Orientierung in Längsrichtung unter dem (in Figuren 1A-1C) nicht dargestellten) Boden eines Lagerschachts montiert. In dem Boden des Lagerschachts befindet sich eine Öffnung, durch die - in einer Ruhestellung der Sperrvorrichtung - ein oberer Abschnitt eines Sperrbauteils 2 derart in den Lagerschacht hineinragt, daß er einen Anschlag für die in dem Lagerschacht hinabrutschenden Stückgüter bildet und diese am Weiterrutschen hindert. Das in Figur 1A bis 1C dargestellte Spritzgußbauteil 1 weist an den Enden 3 und 4 Einrichtungen auf, mit denen es am Boden des Lagerschachts befestigt werden kann. Zwischen den befestigten Enden 3 und 4 des Spritzgußbauteils 1 und dem zentral angeordneten Sperrbauteil 2 erstrecken sich Federarme 5 und 6, die eine vertikale Auslenkung des Sperrbauteils 2 ermöglichen. Bei der in den Figuren 1A bis 1C gezeigten Ausführungsform greift ein weiterer Federarm 7 mit einem Ende an dem Sperrbauteil 2 an, wobei das andere Ende 8 in einer Ausnehmung einer aus dem Boden des Lagerschachts abgewinkelten Halterung (nicht gezeigt in den Figuren 1A bis 1C) festgelegt ist. Der zusätzliche Federarm 7 sichert, daß das Sperrbauteil in seiner Ruhestellung stets soweit in den Lagerschacht hineingedrückt wird, daß die Oberseite der Federarme 5 und 6 an der Unterseite des Bodens des Lagerschachts anliegen.

An der unteren Seite des von den Federarmen 5,6 und 7 gehaltenen Sperrbauteils 2 ist ein Ansatz 9 angeformt, in den ein Betätigungselement 10 eingreift. Das Betätigungselement 10 zum Betätigen des Sperrbauteils 2 mittels eines vor dem unteren Ende des Lagerschachts angeordneten Bediengeräts ist ein zweiseitiger Betätigungshebel mit einem in den Ansatz 9 eingreifenden ersten Hebelarm 11 und einem zweiten Hebelarm 12, an dem ein Element des Bediengeräts angreifen kann. Der Schwenkpunkt des zweiseitigen Hebels stützt sich - bei Montage des Spritzgußbauteils 1 unter dem Boden des Lagerschachts - an der Unterseite des Bodens des Lagerschachts ab. Die Fläche, mit der sich der Betätigungshebel 10 an dem Boden des Lagerschachts abstützt, ist in Figur 10 mit dem Bezugszeichen 13 gekennzeichnet. Der Betätigungshebel 10 ist über zwei dünne Haltestege 14 mit dem feststehenden Ende 3 des Spritzgußbauteils 1 verbunden. Die Haltestege 14 halten den Betätigungshebel 10 dann, wenn dieser nicht betätigt wird, in seiner Ruheposition.

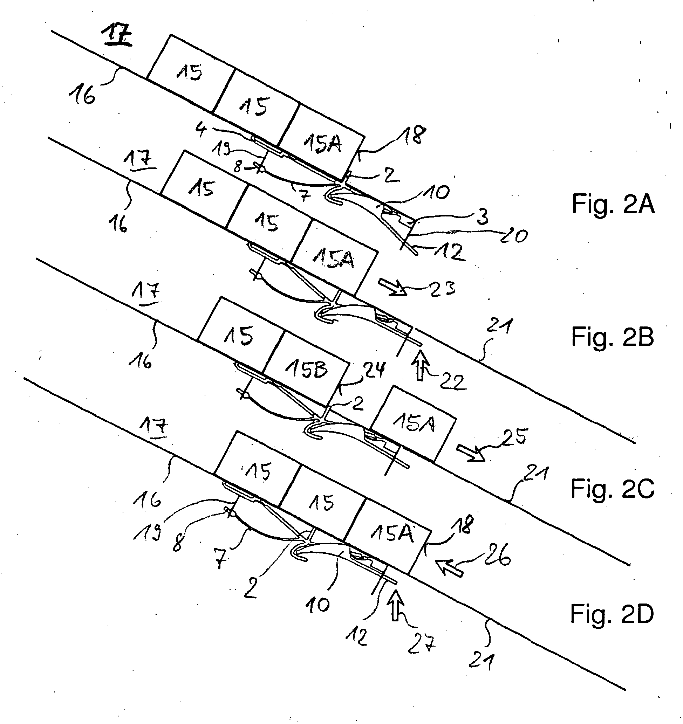

Die Figuren 2A bis 2D zeigen einige Bewegungsphasen der Lagerung, der Entnahme und der Einlagerung von Stückgütern. Figur 2A zeigt den Ruhezustand. Drei beispielhaft dargestellte Stückgüter 15, beispielsweise drei Arzneimittelpackungen unterschiedlicher Art, aber etwa vergleichbarer Breite (entspricht der Lagerschachtbreite) liegen hintereinander auf dem Boden 16 eines geneigten Lagerschachts 17 auf. Sie werden von den (nicht gezeigten) Seitenwandungen des Lagerschachts 17 geführt. Die Stirnseite 18 des zuunterst einliegenden Stückguts 15A stößt gegen das in den Lagerschacht 17 hineinragende Sperrbauteil 2 der passiven Sperrvorrichtung. Das Sperrbauteil 2 sowie der Betätigungshebel 10 befinden sich in der Ruhestellung, in der der nach vorn weisende Hebelarm 12 des Betätigungshebels 10 seine unterste Position einnimmt. Die Halterungen der Enden 3 und 4 des Spritzgußbauteils 1 sind am Boden 16 des Lagerschachts 17 befestigt; ebenso ist das Ende 8 des Federarms 7 an einer aus dem Boden 16 des Lagerschachts 17 abgewinkelten Halterung 19 festgelegt. Das am unteren Ende des Lagerschachts 17 angeordnete Ende 3 des Spritzgußbauteils 1 stützt sich an einem nach unten abgewinkelten Abschnitt des Bodens des Lagerschachts 17 ab. Der nach unten abgewinkelte Abschnitt 20 weist eine Ausnehmung auf, durch die das Ende 12 des Betätigungshebels 10 hindurchgreift.

Figur 2B zeigt den mit drei Stückgütern 15 gefüllten Lagerschacht 17 in einer Phase des Herabrutschens der Stückgüter bei aus dem Lagerschacht 17 nach unten herausbewegtem Sperrbauteil 2. An das untere Ende des Lagerschachts 17 ist ein einen Pufferschacht aufweisendes Bediengerät herangefahren, wobei in Figur 2B lediglich der Boden 21 des Pufferschachts schematisch dargestellt ist. Mit dem Pfeil 22 ist schematisch das Einwirken eines Betätigungselements des Bediengeräts auf das ihm zugewandte untere Ende des Betätigungshebels 10 dargestellt. Der Hebelarm 12 des Betätigungshebels 10 wird von einem Betätigungselement des Bediengeräts gemäß dem Pfeil 22 nach oben bewegt, so daß der andere Hebelarm 11 sich nach unten, das heißt von dem Boden 16 des Lagerschachts wegbewegt. Da dieser Hebelarm 11 in den Ansatz 9 des Sperrbauteils 2 eingreift, wird das Sperrbauteil 2 ebenfalls nach unten gezogen. Sobald das obere Ende des Sperrbauteils 2 den Boden 16 des Lagerschachts 17 erreicht hat, wird das zuunterst liegende Stückgut 15A nicht mehr gehalten und rutscht nach unten. Dies ist durch den Pfeil 23 angedeutet. Die dahinter einliegenden Stückgüter 15 rutschen nach.

Figur 2C zeigt eine Phase des Auslagerns des untersten Stückguts 15A kurze Zeit nach der in Figur 2B dargestellten Anfangsphase. Sobald das zuunterst einliegende Stückgut 15A teilweise über die Oberseite des Sperrbauteils 2 hinweg gerutscht ist, wird der Hebelarm 12 des Betätigungshebels 10 von dem Bediengerät geringfügig nach unten abgesenkt, so daß sich der andere Hebelarm 11 und mit ihm der Ansatz 9 sowie das Sperrbauteil 2 aufgrund der Vorspannung durch die Federarme 5,6 und 7 geringfügig nach oben bewegen. Das Sperrbauteil 2 tritt wieder in den Lagerschacht 17 ein, so daß die nachrutschenden Stückgüter 15 nur so weit nachrutschen können, bis die Frontseite 24 des nunmehr zuunterst einliegenden Stückguts 15B an dem Sperrbauteil 2 anschlägt. Anschließend rutscht lediglich das Stückgut 15A weiter, verläßt den Lagerschacht 17 und rutscht auf den Boden 21 des Pufferschachts des Bediengeräts weiter, bis es dort gegen einen Anschlag trifft. Diese Phase des Weiterrutschens ist in Figur 2C gezeigt; die Bewegungsrichtung ist durch den Pfeil 25 angedeutet.

Figur 2D zeigt den Pufferschacht 17 mit dem am unteren Ende des Pufferschachts positionierten Bediengerät während einer Phase des Hochschiebens von Stückgütern aus dem Pufferschacht des Bediengeräts in den Lagerschacht 17. Der Boden 21 des Pufferschachts des Bediengeräts ist dabei so positioniert, daß seine Oberseite mit der Oberseite des Bodens 16 des Lagerschachts 17 fluchtet oder geringfügig höher angeordnet ist, so daß sich während des Hochschiebens zwischen dem Boden 21 des Pufferschachts und dem Boden 16 des Lagerschachts 17 keine störende Stufe bildet. Das Hochschieben der Stückgüter 15 ist durch den Pfeil 26 angezeigt. Der Pfeil 27 zeigt das Betätigen des Hebelarms 12 des Betätigungshebels 10 an. Durch das Betätigen des Betätigungshebels 10 wird das Sperrbauteil 2 aus dem Lagerschacht 17 herausbewegt. Die Stückgüter 15 werden von einem (in Figur 2D nicht gezeigten) Schieber des Bediengeräts nach oben geschoben. Sie werden so weit hochgeschoben, bis die Stirnseite 18 des zuunterst einliegenden Stückguts 15A hinter die Position des Sperrbauteils 2 geschoben ist. Dann wird die durch den Pfeil 27 angezeigte Betätigung des Sperrbauteils 2 beendet, so daß das Sperrbauteil 2 von den Federarmen 5, 6 und 7 in den Lagerschacht 17 hineinbewegt wird. Dann kann der Schieber des Bediengeräts wieder zurückgefahren und anschließend das Bediengerät zu einem unteren Ende eines anderen Lagerschachts gefahren werden.

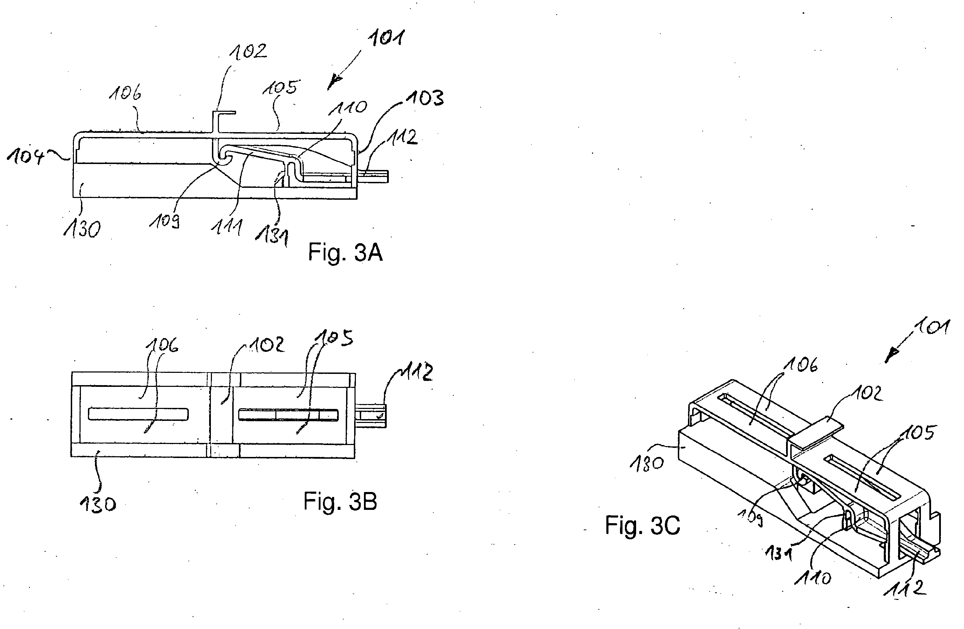

Figur 3A zeigt eine Seitenansicht einer zweiten bevorzugten Ausführungsform eines Spritzgußbauteils für eine passive Sperrvorrichtung des erfindungsgemäßen Stückgutlagers. Figur 3B zeigt eine Draufsicht und Figur 3C eine Perspektivansicht von oben, vorn.

Das in den Figuren 3A bis 3C gezeigte Spritzgußbauteil 101 ist einstückig aus Kunststoff durch Spritzguß hergestellt. Das Spritzgußbauteil 101 ist in der Figur 3A dargestellten Orientierung in Längsrichtung unter dem (in den Figuren 3A bis 3C nicht gezeigten) Boden eines Lagerschachts montiert. In dem Boden des Lagerschachts befindet sich eine Öffnung, durch die - in einer Ruhestellung der Sperrvorrichtung - ein oberer Abschnitt eines Sperrbauteils 102 derart in den Lagerschacht hineinragt, daß er einen Anschlag für die in dem Lagerschacht hinabrutschenden Stückgüter bildet und diese am Weiterrutschen hindert. Das in Figuren 3A bis 3C dargestellte Spritzgußbauteil 101 weist an seiner Unterseite einen dickwandigen Stützrahmen 130 auf. Zwischen einem vorderen Ende 103 und einem hinteren Ende 104 des Stützrahmens 130 und dem zentral angeordneten Sperrbauteil 102 erstrecken sich Federarme 105 und 106, die eine vertikale Auslenkung des Sperrbauteils 102 ermöglichen und das Sperrbauteil 102 stets in die in den Figuren 3A bis 3C dargestellte Ruhelage zurückführen. Der Rahmen 130 geht einstückig in die Federarme 105 und 106 über und diese gehen in das Sperrbauteil 102 über, d. h., daß die hier funktionell unterschiedenen Elemente bei der in den Figuren 3A bis 3C dargestellten Ausführungsform örtlich nicht exakt voneinander abgrenzbar sind.

An der unteren Seite des von den Federarmen 105 und 106 gehaltenen Sperrbauteils 102 ist ein Ansatz 109 angeformt, in den ein Betätigungselement 110 eingreift. Das Betätigungselement 110 zum Betätigen des Sperrbauteils 102 mittels eines vor dem unteren Ende des Lagerschachts angeordneten (hier nicht gezeigten) Bediengeräts, ist ein zweiseitiger Betätigungshebel mit einem in den Ansatz 109 eingreifenden ersten Hebelarm 111 und einem zweiten Hebelarm 112, an dem ein Element des Bediengeräts angreifen kann. Der Schwenkpunkt des zweiseitigen Betätigungshebels 110 wird am Boden des Stützrahmens 130 durch einen kurzen federnden Steg 131 gehalten. Der Steg 131 ist ausreichend nachgiebig, um die Schwenkbewegung des Hebels 110 zu ermöglichen, und weist darüber hinaus eine ausreichende Zugfestigkeit auf, um die beim Angreifenden des Bediengeräts an den Hebelarm 112 entstehenden Zugkräfte aufnehmen zu können.

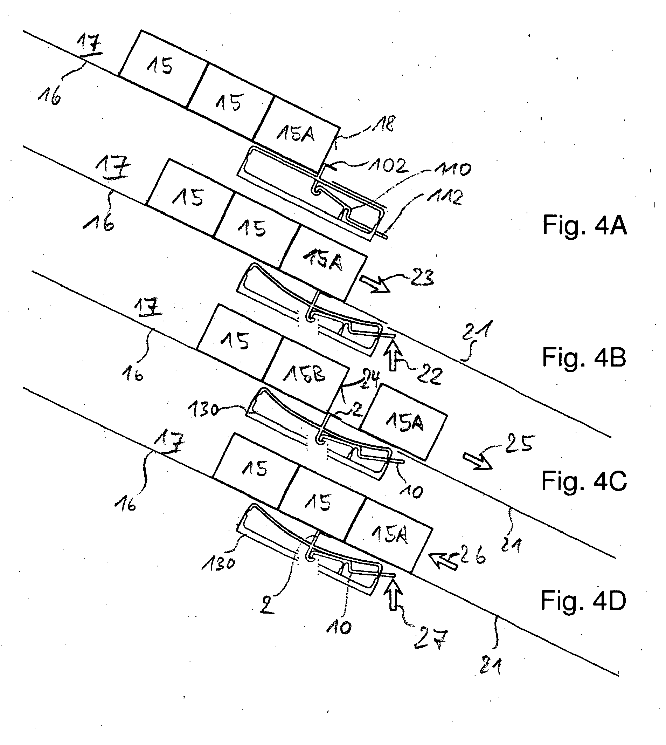

Die Figuren 4A bis 4D zeigen einige Bewegungsphasen der Lagerung, Entnahme und der Einlagerung von Stückgütern in den erfindungsgemäßen Stückgutlager mit der zweiten bevorzugten Ausführungsform des Spritzgußbauteils. Die Bewegungsphasen der Figuren 4A bis 4D entsprechen den der Figuren 2A bis 2D.

Figur 4A zeigt den Ruhezustand. Drei beispielhaft dargestellte Stückgüter 15, 15A, beispielsweise drei Arzneimittelpackungen unterschiedlicher Art, aber etwa vergleichbarer Breite liegen hintereinander auf dem Boden 16 eines geneigten Lagerschachts 17 auf. Sie werden von den (nicht gezeigten) Seitenwandungen des Lagerschachts 17 geführt. Die Stirnseite 18 des zuunterst einliegenden Stückguts 15A stößt gegen das in den Lagerschacht 17 hineinragende Sperrbauteil 102 der passiven Sperrvorrichtung. Das Sperrbauteil 102 sowie der Betätigungshebel 110 befinden sich in der Ruhestellung, in der der nach vorn weisende Hebelarm 112 des Betätigungshebels 110 seine unterste Position einnimmt. Die Art der Montage des Spritzgußbauteil 101 unter den Boden des Lagerschachts 17 ist in den Figuren 4A bis 4D nicht dargestellt. Vorzugsweise ist der Stützrahmen 130 des Spritzgußbauteils 101 auf einer Unterlage oder Halterung montiert, die wiederum beispielsweise am Boden 16 des Lagerschachts 17 befestigt ist.

Figur 4D zeigt den mit drei Stückgütern 15 gefüllten Lagerschachts 17 in einer Phase des Herabrutschens der Stückgüter bei aus dem Lagerschacht 17 nach unten herausbewegtem Sperrbauteil 102. An das untere Ende des Lagerschachts 17 ist ein einen Pufferschacht aufweisendes Bediengerät herangefahren, wobei in Figur 4D lediglich der Boden 21 des Pufferschachts schematisch dargestellt ist. Mit dem Pfeil 22 ist schematisch das Einwirken eines Betätigungselements des Bediengeräts auf das ihm zugewandte untere Ende des Betätigungshebels 110 dargestellt. Der Hebelarm 112 des Betätigungshebels 110 wird von einem Betätigungselement des Bediengeräts gemäß dem Pfeil 22 nach oben bewegt, so daß der andere Hebelarm 11 sich nach unten, d. h. von dem Boden 16 des Lagerschachts 17 weg bewegt. Da dieser Hebelarm 111 in den Ansatz 109 des Sperrbauteils 102 eingreift, wird das Sperrbauteil 102 ebenfalls nach unten gezogen. Sobald das obere Ende des Sperrbauteils 102 den Boden 16 des Lagerschachts 17 erreicht hat, wird das zuunterst liegende Stückgut 15A nicht mehr gehalten und rutscht nach unten. Dies ist durch den Pfeil 23 angedeutet. Die dahinter einliegenden Stückgüter 15 rutschen nach.

Figur 4C zeigt eine Phase des Auslagerns des untersten Stückguts 15A kurze Zeit nach der in Figur 4B dargestellten Anfangsphase. Sobald das zuunterst einliegende Stückgut 15A teilweise über die Oberseite des Sperrbauteils 102 hinweggerutscht ist, wird der Hebelarm 112 des Betätigungshebels 110 von dem Bediengerät geringfügig nach unten abgesenkt, so daß sich der andere Hebelarm 111 und mit ihm der Ansatz 109 sowie das Sperrbauteil 102 aufgrund der Vorspannung durch die Federarme 105 und 106 geringfügig nach oben bewegen. Das Sperrbauteil 102 tritt wieder in den Lagerschacht 17 ein, so daß die nachrutschenden Stückgüter 15 nur soweit nachrutschen können, bis die Frontseite 24 des nunmehr zuunterst einliegenden Stückguts 15B an dem Sperrbauteil 102 anschlägt. Anschließend rutscht lediglich das Stückgut 15A weiter, verläßt den Lagerschacht 17 und rutscht auf den Boden 21 des Pufferschachts des Bediengeräts weiter, bis es dort gegen einen Anschlag trifft. Diese Phase des Weiterrutschens ist in Figur 4C gezeigt; die Bewegungsrichtung ist durch den Pfeil 25 angedeutet.

Figur 4D zeigt den Pufferschacht 17 mit dem am unteren Ende des Pufferschachts 17 positionierten Bediengerät während einer Phase des Hochschiebens von Stückgütern aus dem Pufferschacht des Bediengeräts in den Lagerschacht 17. Der Boden 21 des Pufferschachts des Bediengeräts ist dabei so positioniert, daß seine Oberseite mit der Oberseite des Bodens 16 des Lagerschachts 17 fluchtet oder geringfügig höher angeordnet ist, so daß sich beim Hochschieben zwischen dem Boden 21 des Pufferschachts und dem Boden 16 des Lagerschachts 17 keine störende Stufe bildet. Das Hochschieben der Stückgüter 15 ist durch den Pfeil 26 angezeigt. Der Pfeil 27 zeigt das Betätigen des Hebelarms 112 des Betätigungshebels 110 an. Durch das Betätigen des Betätigungshebels 110 wird das Sperrbauteil 102 aus dem Lagerschacht 17 heraus bewegt. Die Stückgüter 15 werden von einem (in Figur 4D nicht gezeigten) Schieber des Bediengeräts nach oben geschoben. Sie werden soweit hochgeschoben, bis die Stirnseite 18 des zuunterst einliegenden Stückguts 15A hinter die Position des Sperrbauteils 102 geschoben ist. Dann wird die durch den Pfeil 27 angezeigte Betätigung des Sperrbauteils 102 beendet, so daß das Sperrbauteil 102 von den Federarmen 105 und 106 in den Lagerschacht 17 hineinbewegt wird. Dann kann der Schieber des Bediengeräts wieder zurückgefahren und anschließend das Bediengerät zu einem unteren Ende eines anderen Lagerschachts gefahren werden.

## Patentansprüche

1. Automatisiertes Stückgutlager für eine Vielzahl von Stückgütern unterschiedlicher Art und Abmessungen,
wobei das Stückgutlager mehrere geneigte Lagerschächte (17) aufweist, die jeweils mehrere Stückgüter (15, 15A, 15B) aufnehmen können,
wobei vor den unteren Enden der geneigten Lagerschächte wenigstens ein Bediengerät verfahrbar ist,
wobei jeder geneigte Lagerschacht feststehend montiert ist und an seinem unteren Ende eine unter dem Lagerschacht angeordnete passive Sperrvorrichtung zum Verhindern eines Heräusrutschens einliegender Stückgüter aufweist,
wobei die passive Sperrvorrichtung aufweist:
ein von unten in den Lagerschacht (17) hineinbewegbares Sperrbauteil (2; 102),
wenigstens ein das Sperrbauteil (2; 102) in den Lagerschacht (17) hineindrückendes Vorspannelement (5, 6, 7; 105, 106) und
ein Betätigungselement (10; 110), dass so ausgebildet ist, dass es von einem an das untere Ende des Lagerschachts (17) heranfahrenden Bediengerät derart betätigt werden kann, dass das Sperrbauteil (2; 102) aus dem Lagerschacht herausbewegt wird, so daß Stückgüter (15, 15A, 15B) aus dem Lagerschacht in eine Aufnahme des Bediengeräts hinabrutschen können, wobei das Betätigungselement (10; 110) einen zweiseitigen Hebel aufweist,
**dadurch gekennzeichnet,**
**dass** ein Ende des zweiseitigen Hebels des Betätigungselements an einem Ansatz (9; 109) des Sperrbauteils (2; 102)angreift, und an dem anderen Ende des zweiseitigen Hebels das Bediengerät angreift, wobei das Sperrbauteil aus dem Lagerschacht herausbewegt wird, wenn das Bediengerät das ihm zugewandte Ende des Hebels (10; 110) nach oben bewegt.

2. Automatisiertes Stückgutlager nach Anspruch 1, **dadurch gekennzeichnet,**
**dass** das Sperrbauteil (2) über das Vorspannelement (5, 6) an dem Boden des Lagerschachts befestigt ist und
**daß** sich der Schwenkpunkt des Hebels (10) auf der Bodenunterseite des Lagerschachts abstützt.

3. Automatisiertes Stückgutlager nach Anspruch 1, **dadurch gekennzeichnet,**
**dass** die Sperrvorrichtung einen Stützrahmen (130) aufweist,
**dass** das Sperrbauteil (102) über das Vorspannelement (105; 106) an dem Stützrahmen (130) befestigt ist, und
**dass** sich der Schwenkpunkt des Hebels (110) auf dem Stützrahmen (130) abstützt.

4. Automatisiertes Stückgutlager nach einem der Ansprüche 1 - 3, **dadurch gekennzeichnet, dass** das Sperrbauteil, das wenigstens eine Vorspannelement und das Betätigungselement der Sperrvorrichtung einstückig ausgebildet sind.

5. Automatisiertes Stückgutlager nach Anspruch 4, **dadurch gekennzeichnet, dass** das Sperrbauteil, das wenigstens eine Vorspannelement und das Betätigungselement einstückig als Kunststoff-Spritzgussbauteil (1; 101) ausgebildet sind.

6. Automatisiertes Stückgutlager nach Anspruch 5, **dadurch gekennzeichnet, dass** das Spritzgussbauteil (1; 101) Ansätze aufweist, mit deren Hilfe es in an dem Lagerschacht angeformten Halterungen formschlüssig gehalten wird.

7. Automatisiertes Stückgutlager nach einem der Ansprüche 1 - 6, **dadurch gekennzeichnet, dass** das Bediengerät einen Pufferschacht zur Aufnahme mehrerer zu transportierender Stückgüter aufweist, wobei ein Ende des Pufferschachts jeweils an ein unteres Ende eines Lagerschachts (17) heranfahrbar ist,
wobei das Bediengerät eine Schiebevorrichtung zum Halten und Verschieben der im Pufferschacht einliegenden Stückgüter aufweist, und dass das Sperrbauteil bei Betätigung des Betätigungselements derart aus dem Lagerschacht herausbewegt wird, dass Stückgüter mit Hilfe der Schiebevorrichtung aus, dem Pufferschacht in den Lagerschacht hinaufgeschoben werden können.

## Claims

1. An automated article store for a plurality of articles of different type and dimensions, wherein the article store includes a plurality of inclined storage shafts (17), which can each accommodate a plurality of articles (15, 15A, 15B), wherein at least one service device is movable in front of the lower ends of the inclined storage shafts, wherein each inclined storage shaft is fixedly mounted and, at its lower end, includes a passive blocking device arranged below the storage shaft for preventing articles situated within it from slipping out, wherein the passive blocking device includes: a blocking member (2; 102), which is movable from below into the storage shaft (17), at least one biasing element (5, 6, 7; 105, 106) pressing the blocking member (2; 102) into the storage shaft (17) and an actuating element (10; 110), which is so constructed that it can be actuated by a service device approaching the lower end of the storage shaft (17) such that the blocking member (2; 102) is moved out of the storage shaft so that articles (15, 15A, 15B) can slip down out of the storage shaft into a receptacle on the service device, wherein the actuating element (10; 110) includes a two-sided lever, **characterised in that** one end of the two-sided lever of the actuating element engages a formation (9; 109) on the blocking member (2; 102) and the service device engages the other end of the two-sided lever, whereby the blocking member is moved out of the storage shaft when the service device moves the end of the lever (10; 110), directed towards it, upwardly.

2. An automated article store as claimed in Claim 1, **characterised in that** the blocking member (2) is connected via the biasing element (5, 6) to the base of the storage shaft and that the thrust point of the lever (10) bears on the underside of the base of the storage shaft.

3. An automated article store as claimed in Claim 1, **characterised in that** the blocking device has a support frame (130) that the blocking member (102) is secured via the biasing element (105; 106) to the support frame (130) and that the thrust point of the lever (110) bears on the support frame (130).

4. An automated article store as claimed in one of Claims 1 - 3, **characterised in that** the blocking member, the at least one biasing element and the actuating element of the blocking device are of one-piece construction.

5. An automated article store as claimed in Claim 4, **characterised in that** the blocking member, the at least one biasing element and the actuating element are of one-piece construction in the form of an injection moulded plastic component (1; 101).

6. An automated article store as claimed in Claim 5, **characterised in that** the injection moulded component (1; 101) includes formations with whose aid it is positively retained in mountings formed on the storage shaft.

7. An automated article store as claimed in one of Claims 1 - 6, **characterised in that** the service device includes a buffer shaft for receiving a plurality of articles to be transported, wherein one end of the buffer shaft may be advanced to a lower end of a storage shaft (17), wherein the service device includes a pushing device for holding and sliding the articles situated in the buffer shaft and that the blocking member is moved, on actuation of the actuating element, out of the storage shaft such that articles can be pushed up out of the buffer shaft into the storage shaft with the aid of the pushing device.

## Revendications

1. Entrepôt de marchandises automatisé pour une pluralité de marchandises de types et dimensions différents,
dans lequel l'entrepôt de marchandises présente plusieurs puits de stockage inclinés (17), qui peuvent recevoir chaque fois plusieurs marchandises (15, 15A, 15B),
dans lequel au moins un organe de manoeuvre peut être déplaçable devant les extrémités inférieures des puits de stockage inclinés,
dans lequel chaque puits de stockage incliné est monté stationnaire et présente, à son extrémité inférieure, un dispositif de verrouillage passif aménagé en dessous du puits de stockage pour empêcher les marchandises qui s'y trouvent de s'en dégager par glissement,
dans lequel le dispositif de verrouillage passif présente :
une pièce de verrouillage (2 ; 102) déplaçable d'en bas dans le puits de stockage (17),
au moins un élément de précontrainte (5, 6, 7 ; 105, 106) pressant la pièce de verrouillage (2 ; 102) dans le puits de stockage (17), et
un élément de commande (10 ; 110) qui est formé de manière qu'il puisse être commandé par un organe de manoeuvre s'approchant de l'extrémité inférieure du puits de stockage (17) de sorte que la pièce de verrouillage (2 ; 102) soit déplacée hors du puits de stockage afin que les marchandises (15, 15A, 15B) puissent glisser vers le bas hors du puits de stockage dans un logement de l'organe de manoeuvre, l'élément de commande (10 ; 110) présentant un levier à double face,
**caractérisé en ce que**
une extrémité du levier à double face de l'élément de commande s'accroche à un ressaut (9 ; 109) de la pièce de verrouillage (2 ; 102) et l'organe de manoeuvre s'accroche à l'autre extrémité du levier à double face, la pièce de verrouillage étant déplacée hors du puits de stockage si l'organe de manoeuvre déplace vers le haut l'extrémité du levier (10 ; 110) qui est tournée vers lui.

2. Entrepôt de marchandises automatisé selon la revendication 1, **caractérisé en ce que**
la pièce de verrouillage (2) est fixée au fond du puits de stockage via l'élément de précontrainte (5, 6), et
le point pivot du levier (10) s'appuie sur la partie inférieure du fond du puits de stockage.

3. Entrepôt de marchandises automatisé selon la revendication 1, **caractérisé en ce que**
le dispositif de verrouillage présente un châssis de support (130),
la pièce de verrouillage (102) est fixée au châssis de support (130) via l'élément de précontrainte (105 ; 106), et
le point pivot du levier (110) s'appuie sur le châssis de support (130).

4. Entrepôt de marchandises automatisé selon l'une quelconque des revendication 1 à 3, **caractérisé en ce que** la pièce de verrouillage, le au moins un élément de précontrainte et l'élément de commande du dispositif de verrouillage sont formés d'une seule pièce.

5. Entrepôt de marchandises automatisé selon la revendication 4, **caractérisé en ce que** la pièce de verrouillage, le au moins un élément de verrouillage et l'élément de commande sont formés d'une seule pièce sous l'aspect d'une pièce moulée par injection (1 ; 101) en matériau synthétique.

6. Entrepôt de marchandises automatisé selon la revendication 5, **caractérisé en ce que** la pièce moulée par injection (1 ; 101) présente des ressauts à l'aide desquels elle est maintenue dans des fixations formées sur le puits de stockage par adaptation de formes.

7. Entrepôt de marchandises automatisé selon l'une quelconque des revendication 1 à 6, **caractérisé en ce que** l'organe de manoeuvre présente un puits tampon pour loger plusieurs marchandises à transporter, dans lequel une extrémité du puits tampon peut être approchée d'une extrémité inférieure d'un puits de stockage (17), dans lequel l'organe de manoeuvre présente un dispositif coulissant pour retenir et déplacer les marchandises se trouvant dans le puits tampon et
dans lequel, lors de la commande de l'élément de commande, la pièce de verrouillage est déplacée hors du puits de stockage de sorte que les marchandises puissent être glissées hors du puits tampon dans le puits de stockage à l'aide du dispositif coulissant.
